# EUROPÄISCHE PATENTSCHRIFT

(11) **EP 2 108 939 B1**
(45) Veröffentlichungstag und Bekanntmachung des Hinweises auf die Patenterteilung: **06.11.2013**
(21) Anmeldenummer: 09005031.1
(22) Anmeldetag: 04.04.2009
(51) Int. Cl.: G01N 21/31, G01N 21/35, G01N 21/59, G01N 15/08, G01N 9/24, G01N 21/84

(54) **Verfahren zur Prüfung der Dichte und/oder Homogenität von Bauteilen**
Method for inspecting the density and/or homogeneity of structural components
Procédé pour examiner la densité et/ou l'homogénéité d'un composant structurel

(30) Priorität: 09.04.2008 DE 102008017996; 26.02.2009 DE 102009010638
(43) Veröffentlichungstag der Anmeldung: 14.10.2009
(73) Patentinhaber: Fraunhofer-Gesellschaft zur Förderung der angewandten Forschung e.V., 80686 München (DE)
(72) Erfinder: Wöstmann, Franz-Josef, Dipl.-Ing., 48163 Münster (DE)
(74) Vertreter: Gagel, Roland

(56) Entgegenhaltungen:
- WO-A1-2007/088215
- DE-A1-102005 025 062
- KOCH M: "THz imaging: fundamentals and biological applications", PROCEEDINGS OF SPIE, S P I E - INTERNATIONAL SOCIETY FOR OPTICAL ENGINEERING, US, Bd. 3828, 1. Januar 1999 (1999-01-01), Seiten 202-208, XP002411940, ISSN: 0277-786X, DOI: 10.1117/12.361035

## Beschreibung

### Technisches Anwendungsgebiet

Die vorliegende Erfindung betrifft ein Verfahren zur zerstörungsfreien Prüfung der Dichte und/oder Homogenität eines Bauteils, eines Bereichs eines Bauteils oder eines Volumens, das für Licht bzw. elektromagnetische Strahlung eines Wellenlängenbereichs im ferninfraroten, infraroten, sichtbaren und/oder ultravioletten Spektralbereich transluzent ist. Ein Hauptanwendungsgebiet des Verfahrens ist die zerstörungsfreie Prüfung der Dichte und Homogenität bei der Herstellung von Bauteilen aus Kunststoffen, speziell aus expandierbaren Kunststoffen. Dies betrifft bspw. die Herstellung von Modellen für das Lost Foam-Verfahren sowie Dämmmaterialien, Verpackungsmaterialien und Kunststoffbauteile, die durch Schäumen, Extrudieren oder Vergießen hergestellt werden.

### Stand der Technik

Die Prüfung der Dichte und Homogenität von Bauteilen spielt beispielsweise bei der Herstellung von Bauteilen aus expandierbaren Kunststoffen eine wichtige Rolle. Bisher werden die Dichten derartiger Bauteile nur für ein Gesamtbauteil durch Ermittlung des Volumens und der Masse bestimmt. Für eine lokale Dichteermittlung in den Bauteilen werden diese in Segmente zerschnitten und die Dichte der einzelnen Segmente nach der Auftriebsmethode bestimmt. Dies erfordert jedoch einen erheblichen Aufwand und lässt sich zudem nur in Stichproben während des Herstellungsprozesses durchführen.

### Darstellung der Erfindung

Die Aufgabe der vorliegenden Erfindung besteht darin, ein Verfahren zur Dichte- und Homogenitätsprüfung von Bauteilen anzugeben, das sich mit verringertem Aufwand einsetzen lässt und eine in den Herstellungsprozess integrierbare ortsaufgelöste Prüfung der Dichte der Bauteile ermöglicht. Das Verfahren soll sich vor allem für die Prüfung der Dichte und Homogenität von Bauteilen aus Kunststoffen mit geringen Dichten, insbesondere von Bauteilen aus expandierten Kunststoffen, eignen.

Die Aufgabe wird mit dem Verfahren gemäß Patentanspruch 1 gelöst. Vorteilhafte Ausgestaltungen des Verfahrens sind Gegenstand der abhängigen Patentansprüche oder lassen sich der nachfolgenden Beschreibung sowie dem Ausführungsbeispiel entnehmen. In einer abgewandelten Technik des Verfahrens lassen sich auch unerwünschte Dickenschwankungen des Bauteils sowie der Feuchtegehalt des Bauteils ortsaufgelöst bestimmen.

Mit dem vorliegenden Verfahren wird die Dichte und/oder die Homogenität eines Bauteils, eines Bereichs eines Bauteils oder eines Volumens geprüft, das vollständig oder in dem Bereich für Licht bzw. elektromagnetische Strahlung eines Wellenlängenbereichs im ferninfraroten, infraroten, sichtbaren und/oder ultravioletten Spektralbereich transluzent ist. Unter der Transluzenz wird hierbei in bekannter Weise die teilweise Lichtdurchlässigkeit, nicht jedoch die Transparenz im Sinne einer Bild- oder Blickdurchlässigkeit bezeichnet. Das Bauteil kann hierbei ein beliebig geformtes Objekt sein, das in einer Dimension, in der vorliegenden Patentanmeldung als Dicke bezeichnet, die obige Transluzenz in dem entsprechenden Wellenlängenbereich aufweist. Bei dem vorgeschlagenen Verfahren wird durch zweidimensionale Abtastung des Bauteils, des Bereichs oder des Volumens mit einem Laserstrahl, für den das Bauteil, der Bereich oder das Volumen transluzent ist, ein ortsaufgelöstes Transmissionsbild des Bauteils, des Bereichs oder des Volumens aufgezeichnet. Die zweidimensionale Abtastung erfolgt hierbei in der Ebene (x, y) senkrecht zur Dickenrichtung (z-Richtung) des zu vermessenden Bauteils oder Volumens. Die zweidimensionale Abtastung kann in bekannter Weise durch zweidimensionale Bewegung des Bauteils in der obigen Ebene erfolgen. Die Bildaufzeichnung erfolgt durch Messung der Intensität des durch das Bauteil oder Volumen hindurch getretenen und dadurch abgeschwächten Laserstrahls mit Hilfe eines geeigneten Detektors. Für die Erzielung der hohen Ortsauflösung wird eine räumliche Filterung des Lichts zwischen Bauteil bzw. Volumen und Detektor durchgeführt, durch die der Anteil an Streulicht aus dem Bauteil oder Volumen stark reduziert wird, der auf den Detektor trifft. Dies kann bspw. mit einer oder mehreren Blenden im Strahlengang des Laserstrahls erfolgen.

Das Transmissionsbild wird anschließend mit geometrischen Daten des Bauteils, des Bereichs oder des Volumens korrigiert, um vom Dickenprofil des Bauteils, des Bereichs oder des Volumens unabhängige Transmissionsdaten zu erhalten. Diese Transmissionsdaten können dann bspw. als Farb- oder Graustufenbild an einem Monitor dargestellt werden und zeigen direkt eventuelle Homogenitäts- oder Dichteschwankungen des Bauteils oder Volumens über den abgetasteten Bereich. Für die Korrektur kann bspw. in einer einfachen Ausgestaltung lediglich ausgenutzt, dass die transmittierte Intensität I nach dem Absorptionsgesetz exponentiell von der Dicke d der durchstrahlten Schicht und dem Absorptionskoeffizienten α des Schichtmaterials abhängt: I = I₀*e^{(-α*d)}, wobei I₀ der Intensität des eingestrahlten Laserstrahls entspricht. Die geometrischen Daten des Bauteils können bspw. aus CAD-Daten des Bauteils gewonnen werden.

Das Verfahren lässt sich besonders vorteilhaft im Bereich der Gießereitechnik zur zerstörungsfreien Prüfung der Dichte und/oder Homogenität eines durch Gießen hergestellten oder beim Gießen eingesetzten Bauteils oder eines Bereichs eines derartigen Bauteils einsetzen. Unter Gießen wird hierbei ein Formgebungsverfahren verstanden, bei dem ein flüssiger Werkstoff in eine Form gegossen wird und in der Form erstarrt, um nach dem Erstarren einen festen Körper mit einer durch die Form vorgegebenen Geometrie zu erhalten.

In einer besonderen Ausgestaltung des vorgeschlagenen Verfahrens wird die Abtastung mit einer konfokalen Anordnung von Laserlichtquelle, Bauteil bzw. Volumen und Detektor durchgeführt, bei der der annähernd punktförmige Austrittsort des Laserstrahls aus der Laserlichtquelle, die Detektorfläche des Detektors sowie das Bauteil bzw. Volumen jeweils in einem Fokus des Linsensystems angeordnet sind, durch das der Laserstrahl zunächst auf oder in das Bauteil oder Volumen und anschließend auf die Detektorfläche fokussiert wird. Durch eine derartige optische Anordnung wird störende Streustrahlung beim Durchtritt des Laserstrahls durch das Bauteil oder Volumen noch wirkungsvoller unterdrückt.

Das vorgeschlagene Verfahren bietet somit vor allem die Möglichkeit, Bauteile bzw. Komponenten mit geringen Dichten zerstörungsfrei zu prüfen, die vorzugsweise im Bereich zwischen 15 und 40 g/l, besonders bevorzugt im Bereich zwischen 20 und 30 g/l liegen. Bevorzugte Dickenbereiche liegen zwischen 2 und 40 mm. Die Bauteile können hierbei eine komplexe Geometrie, bspw. mit Rundungen oder Freiformflächen, aufweisen. Durch die zerstörungsfreie Prüfung bleiben die Bauteile im Einsatz und der Prüfaufwand wird gegenüber der zerstörenden Prüfung reduziert, wodurch auch die Kosten für die Prüfung verringert werden. Das vorgeschlagene Verfahren ist im Vergleich zu zerstörenden Prüfungsverfahren des Standes der Technik wesentlich schneller, wobei für die ortsaufgelöste Dichtebestimmung in Abhängigkeit von der gewünschten Ortsauflösung nur wenige Sekunden bis Minuten benötigt werden. Dies ermöglicht auch die Integration des Verfahrens als prozessbegleitende Kontrolle in Linienprozesse bei der Herstellung von Bauteilen, insbesondere im Bereich der Herstellung von Bauteilen aus Kunststoff, speziell aus expandierbarem Kunststoff. Das Verfahren ermöglicht die direkte Prozesskontrolle des Herstellungsprozesses zur Qualitätssicherung oder zur Erfassung des Bauteilzustandes, um daraus Entscheidungen zu weiteren Prozessschritten treffen zu können. So lassen sich damit Herstellungsprozesse kontrollieren und charakterisieren sowie Zusammenhänge mit Folgeprozessen aufzeigen, bspw. der Einfluss von Dichteschwankungen und Inhomogenitäten auf die spätere Formfüllung in Lost Foam-Verfahren oder in Vollformverfahren beim Gießen. Das Verfahren ermöglicht auch die Analyse von Perlen- und Zwickelgröße an der Oberfläche des Bauteils sowie die Erkennung des Perlenverbundes.

In einer bevorzugten Ausgestaltung der in dieser Patentanmeldung beschriebenen Verfahrensvarianten, insbesondere der Patentansprüche 1 bis 15, wird als Laser für die Abtastung ein IR-Laser (IR: infrarot) eingesetzt, der besonders für die Durchleuchtung von Kunststoffen von Vorteil ist. Als Laser eignet sich vor allem eine Laserdiode oder ein Array aus Laserdioden, bspw. in Form eines Laserdiodenbarrens.

Das mit dem Dickenprofil korrigierte Transmissionsbild gibt zunächst nur eine Information über relative Dichten oder Dichteänderungen über den abgetasteten Bereich. Werden absolute Werte benötigt, so wird gemäß einer vorteilhaften Ausgestaltung des Verfahrens ein Bezug der Transmissionsdaten zu Referenzdaten hergestellt, die vorab an einem Vergleichsbauteil aus dem gleichen Material erstellt wurden, dessen lokale Dichten anschließend mittels einer zerstörenden Prüfung absolut bestimmt wurden. Auf diese Weise können dann die gemessenen und korrigierten Transmissionsdaten direkt einer Dichte zugeordnet werden.

In einer weiteren vorteilhaften Ausgestaltung wird der Laserstrahl für die zweidimensionale Abtastung moduliert. Die Aufzeichnung des ortsaufgelösten Transmissionsbildes erfolgt dann mit einer auf die Modulation des Laserstrahls abgestimmten Lock-in-Technik. So kann das Laserlicht beispielsweise mit einer festen Frequenz in der Intensität moduliert werden, z.B. mit einem Chopperrad oder durch direkte Modulation des Stromflusses durch die Laserdiode. Mittels eines Lock-In-Verstärkers werden dann bei der Aufzeichnung des Transmissionsbildes nur die Lichtkomponenten gemessen, die gerade mit der Modulationsfrequenz moduliert waren. So können sehr kleine Lichtintensitäten sehr rauscharm gemessen werden.

Das vorgeschlagene Verfahren lässt sich nicht nur für die zerstörungsfreie Dichteprüfung von Kunststoffen einsetzen. Mit dem Verfahren lassen sich auch andere in gleicher Weise transluzente Bauteile oder Materialien, wie bspw. Glas, gelartige, flüssige oder gasförmige Substanzen prüfen. In einer vorteilhaften Anwendung kann mit dem Verfahren die Bestimmung von Faseranteilen in faserverstärkten Kunststoffen erfolgen. Die mit dem Verfahren lokal ermittelbare Dichte im Bauteil gibt dabei direkt Aufschluss über den lokalen Anteil an Fasern im Bauteil, die eine höhere Dichte als das Matrixmaterial aufweisen. Eine weitere Anwendung betrifft die Bestimmung des Mischungsverhältnisses und der Verteilung von Komponenten oder Additiven in Mehrkomponentenwerkstoffen. Auch in diesem Fall lässt sich über die Variation der Dichte bei bekannten Dichten der Komponenten und Additive das Mischungsverhältnis lokal in dem untersuchten Bauteil bestimmen. In einer weiteren Anwendung lässt sich das Verfahren auch für die Bestimmung der Position, Größe und Verteilung von Poren in einem Bauteil, bspw. einer Membran, einsetzen. Auch diese Technik basiert auf den unterschiedlichen Dichten der Poren und des umgebenden Materials, die mit dem Verfahren erfasst werden. Weitere mögliche Anwendungen des Verfahrens sind die Bestimmung von Oberflächenfehlern auf Bauteilen, die zu einer Intensitätsschwankung im korrigierten Transmissionsbild führen, sowie die Bestimmung von unerwünschten Wanddickenvariationen des Bauteils. In diesem Fall wird das gemessene Transmissionsbild mit Solldaten des Dickenprofils korrigiert, so dass lokale Abweichungen vom Solldickenprofil im Transmissionsbild sichtbar werden. Das Verfahren ermöglicht auch die Prüfung von Klebeschichten auf dem oder in dem Bauteil auf deren Homogenität bzw. Qualität. Voraussetzung ist selbstverständlich auch hierfür, dass die Klebeschichten für das Licht des eingesetzten Lasers transluzent sind.

In einer Abwandlung des vorgeschlagenen Verfahrens lässt sich auch ortsaufgelöst der Feuchtegehalt in einem Bauteil oder Volumen bestimmen. Hierfür werden ein oder zwei Laser oder Laserstrahlen bei zwei unterschiedlichen Wellenlängen eingesetzt, die das Bauteil oder Volumen jeweils auf den gleichen Pfaden abtasten und für die das Bauteil oder Volumen transluzent ist. Die beiden Wellenlängen werden so gewählt, dass sie von Wasser unterschiedlich stark absorbiert werden. So kann bspw. eine Wellenlänge von Wasser nicht oder nur schwach absorbiert und die andere der beiden Wellenlängen von Wasser stärker absorbiert werden. Vorzugsweise ist die Absorption der Trockenmatrix des Bauteils bei beiden Wellenlängen möglichst gleich hoch. Für jede der Wellenlängen wird jeweils ortsaufgelöst eine Transmission des Bauteils oder Volumens gemessen. Werden die Transmissionsdaten der beiden Transmissionsmessungen zueinander in Bezug gesetzt, so kann die lokale Änderung des Feuchtegehaltes über den abgetasteten Bereich des Bauteils oder Volumens herausgerechnet werden. Absolute Werte des Feuchtegehaltes können hierbei wieder durch eine oder mehrere vorab an einem Vergleichsbauteil oder Vergleichsvolumen durchgeführte Referenzmessungen mit bekannten Feuchtegehalten erhalten werden.

Die Messung kann hierbei in unterschiedlicher Weise erfolgen, wobei die nachfolgende Aufzählung beispielhafter Ausgestaltungen selbstverständlich nicht abschließend ist. So kann das Bauteil oder Volumen in einer ersten Ausgestaltung zunächst mit einer Wellenlänge and anschließend mit der anderen Wellenlänge abgetastet werden. In einer zweiten Ausgestaltung kann zwischen den beiden Wellenlängen schnell hin- und hergeschaltet werden, so dass zu jedem Zeitpunkt nur ein Laser oder eine der Wellenlängen aktiv ist. Das Bauteil oder Volumen wird nun abgerastert und bei der Abrasterung wird registriert, welcher Laser bzw. welche Wellenlänge zur Messdatenaufnahme aktiv war. In einer dritten Ausgestaltung erfolgt die Durchstrahlung des Bauteils oder Volumens mit beiden Wellenlängen zugleich. Für die Messung werden zwei Detektoren eingesetzt, von denen jeder nur für jeweils eine Wellenlänge empfindlich ist. Das kann zum Beispiel durch Filter oder durch wellenlängenselektive Strahlteiler erreicht werden. In einer vierten Ausgestaltung erfolgt die Durchstrahlung des Bauteils oder Volumens ebenfalls mit beiden Wellenlängen zugleich. Für die Messung wird hier nur ein Detektor eingesetzt. Beide Laserstrahlen werden mit unterschiedlichen Frequenzen moduliert. Mit einer Lock-In-Verstärkertechnik kann dann aus dem Detektorsignal das transmittierte Signal jeder Wellenlänge extrahiert werden. In einer fünften Ausgestaltung erfolgt die Durchstrahlung des Bauteils oder Volumens ebenfalls mit beiden Wellenlängen zugleich. Auch hier wird nur ein Detektor eingesetzt. Beide Laserstrahlen werden mit unterschiedlichen Frequenzen moduliert. Mit einer Lock-In-Verstärkertechnik wird nun sehr empfindlich der Unterschied der Abschwächung von einer Wellenlänge zu der anderen Wellenlänge gemessen.

Selbstverständlich lässt sich die Bestimmung des Feuchtegehaltes auch mit der Prüfung der Dichte und Homogenität des Bauteils kombinieren, für die die Transmissionsdaten aus dem Transmissionsbild des ersten Laserstrahls herangezogen werden können.

### Kurze Beschreibung der Zeichnungen

Das vorgeschlagene Verfahren wird nachfolgend anhand eines Ausführungsbeispiels in Verbindung mit den Zeichnungen nochmals kurz erläutert. Hierbei zeigen:
- Fig. 1: eine schematische Darstellung der optischen Anordnung bei der Durchführung des vorgeschlagenen Verfahrens sowie
- Fig. 2: ein Beispiel für ein Transmissionsbild (stark schematisiert) bei der Durchführung des Verfahrens.

### Wege zur Ausführung der Erfindung

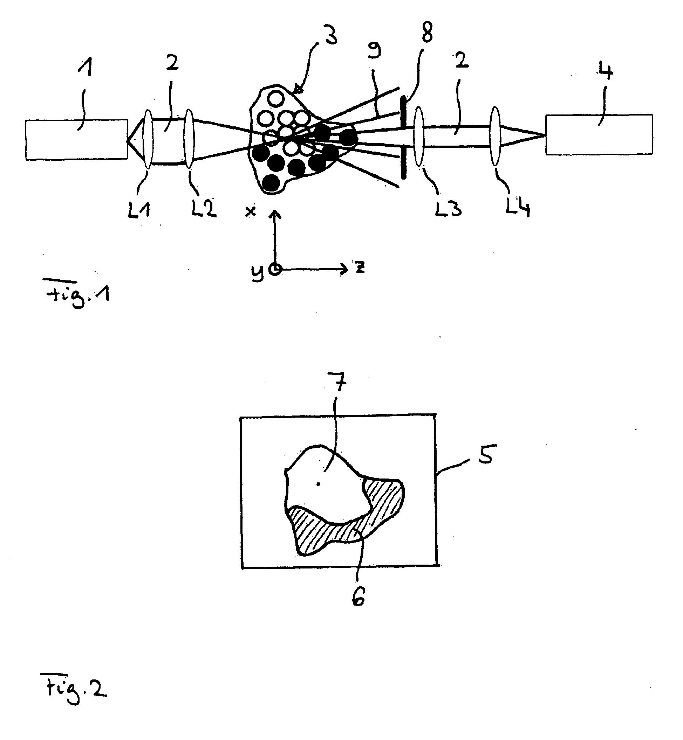

Das vorgeschlagene Verfahren lässt sich vorteilhaft für die Prüfung der Dichte und Homogenität bei der Herstellung von Bauteilen aus Kunststoff einsetzen. Ein Beispiel ist die Bestimmung der Dichte unterschiedlicher EPS (EPS: expandierbares Polystrol; Styropor®) Teile für die Gießereitechnik. Figur 1 zeigt hierzu in schematischer Darstellung einen beispielhaften optischen Aufbau für die Durchführung des Verfahrens. Als Lichtquelle wird ein IR-Laser 1 eingesetzt, der durch eine Laserdiode mit einer Emissionswellenlänge von 1600 nm gebildet ist. Der von dem IR-Laser 1 emittierte Laserstrahl 2 wird über eine optisches System durch das Bauteil 3 auf einen Detektor 4 gerichtet, um mit dem Detektor 4 die abgeschwächte Intensität des Laserstrahls 2 zu erfassen. Der verwendete Detektor 4 wird selbstverständlich in Abhängigkeit von der ausgewählten Wellenlänge gewählt und ist im vorliegenden Beispiel ein Germaniumdetektor für einen Wellenlängenbereich von 800 bis 1700 nm.

Das Bauteil 3 wird mit einer in der Figur 1 nicht dargestellten Verschiebeeinrichtung für die Abtastung in xy-Richtung verschoben, um ein Transmissionsbild des Bauteils 3 zu erhalten. Das Transmissionsbild wird anschließend mit den geometrischen Daten des Bauteils 3, insbesondere dem Dickenprofil (Dicke: z-Richtung), überlagert bzw. korrigiert, um die Variation der Dicke herauszurechnen. Auf diese Weise wird das in Figur 2 dargestellte korrigierte Transmissionsbild 5 erhalten, das lediglich noch Homogenitäts- und Dichteschwankungen in dem abgetasteten Bereich als unterschiedliche Intensitätswerte erkennen lässt. Dieses korrigierte Transmissionsbild 5 wird vorzugsweise durch einen Rechner aus den vom Detektor 4 gemessenen Werten und dem Dichteprofil erstellt und an einem Bildschirm dargestellt. Der Rechner übernimmt vorzugsweise auch die Steuerung der Verschiebeeinrichtung.

Unterschiedliche Dichten sind stark schematisiert in dem in der Figur 1 gezeigten Bauteil 3 als dunkle oder helle Kugeln dargestellt. In dem korrigierten Transmissionsbild 5 der Figur 2 weisen dann die dunklen Bereiche 6 auf Bereiche höherer und die hellen Bereiche 7 auf Bereiche niedrigerer Dichte im Bauteil 3 hin. Diese lassen sich selbstverständlich auch farbig kodiert darstellen.
Die geometrischen Daten des untersuchten Bauteils sind bei der Herstellung von Bauteilen in der Regel bekannt, da jedes Bauteil in einer definierten Geometrie hergestellt werden soll. Auf diese Weise erfordert die Bereitstellung dieser Daten keine zusätzlichen Messungen.

Zur Erzielung des ortsaufgelösten Transmissionsbildes 5 wird für die Abtastung in diesem Beispiel die dargestellte konfokale Anordnung mit den Linsen L1, L2, L3 und L4 gewählt. Das Licht des IR-Lasers 1 wird mit Linse L1 kollimiert und mittels Linse L2 auf oder in das Bauteil 3 fokussiert. Das gestreute Licht 9 wird räumlich mit Hilfe der Blende 8 gefiltert. Nur die Lichtanteile, die die Blende A passieren, werden durch Linse L3 kollimiert und mittels Linse L4 auf den Detektor 4 fokussiert.

In einer Vereinfachung dieses Aufbaus kann die Blende 8 auch weggelassen werden. In diesem Fall wirkt Linse L3 gleichzeitig als Blende, die den Raumwinkel des gestreuten Lichtes beschränkt, der auf den Detektor 4 fokussiert wird. Der Aufbau kann noch weiter vereinfacht werden, indem bspw. Linse L3 und Linse L4 zu einem Element zusammengefasst werden.

Bei dem vorgeschlagenen Verfahren werden somit die Bauteile nach deren Herstellung mit Hilfe des Lasers durchstrahlt und in x-y-Richtung abgerastert, um ein Transmissionsbild des Bauteils zu erstellen. Durch Dichte und Dickenunterschiede des Bauteils wird das Licht geschwächt, so dass das Transmissionsbild entsprechend der Dicken- und Dichtenunterschiede unterschiedliche Intensitäten bzw. Grauwerte aufweist. Durch Überlagerung des Transmissionsbildes mit den geometrischen Daten des Bauteils lässt sich die Dicke herausrechnen und auch bei dreidimensionalen Bauteilen eine Aussage zu den lokalen Dichten machen. Eine Referenz zu den Versuchen kann mittels zerstörender Dichteprüfung erstellt werden. Die hohe Ortsauflösung wird vorzugsweise durch eine konfokale Anordnung von Lichtquelle und Detektor in dem optischen System und/oder durch ein oder mehrere Blenden zur Reduzierung de Einfalls von Streustrahlung auf den Detektor erreicht. Im Unterschied zum Stand der Technik lassen sich mit dem vorgeschlagenen Verfahren prinzipiell wesentlich höhere Ortsauflösungen von wenigen µm für oberflächennahe Bereiche erzielen. So konnten bspw. bei Vermessung eines EPS-Bauteils mit dem im Ausführungsbeispiel dargestellten Aufbau mit einer Abtastschrittweite von 100 µm relative Dichteunterschiede mit einer Auflösung von < 0,5mm dargestellt werden. Der Zeitbedarf pro Pixel des Transmissionsbildes betrug hierbei nur 1 ms.

### Bezugszeichenliste

- 1: IR-Laser
- 2: Laserstrahl
- 3: Bauteil
- 4: Detektor
- 5: Transmissionsbild
- 6: dunkle Bereiche
- 7: helle Bereiche
- 8: Blende
- 9: Streulicht
- L1 - L4: Linsen

## Patentansprüche

1. Verfahren zur Prüfung der Dichte und/oder Homogenität eines Bauteils (3), eines Bereichs eines Bauteils (3) oder eines Volumens, das vollständig oder in dem Bereich für elektromagnetische Strahlung eines Wellenlängenbereichs im ferninfraroten, infraroten, sichtbaren und/oder ultravioletten Spektralbereich transluzent ist,
bei dem
- durch zweidimensionale Abtastung des Bauteils (3), des Bereichs oder des Volumens mit einem Laserstrahl (2), für den das Bauteil (3), der Bereich oder das Volumen transluzent ist, ein ortsaufgelöstes Transmissionsbild des Bauteils (3), des Bereichs oder des Volumens aufgezeichnet wird, wobei ein Einfluss von Streustrahlung (9) auf das Transmissionsbild durch räumliche Filterung reduziert wird, und
- das Transmissionsbild mit geometrischen Daten des Bauteils (3), des Bereichs oder des Volumens korrigiert wird, um von einem Dickenprofil des Bauteils (3), des Bereichs oder des Volumens unabhängige Transmissionsdaten (5) zu erhalten.

2. Verfahren nach Anspruch 1,
bei dem die zweidimensionale Abtastung mit einem optischen Aufbau aus einer Laserlichtquelle, einem Linsensystem (L1-L4) und einer Detektorfläche erfolgt, wobei die Laserlichtquelle und die Detektorfläche sowie das Bauteil (3), der Bereich oder das Volumen konfokal angeordnet sind.

3. Verfahren nach Anspruch 1 oder 2,
bei dem die räumliche Filterung mit mindestens einer Blende (8) im Strahlengang des Laserstrahls (2) erfolgt.

4. Verfahren nach einem der Ansprüche 1 bis 3,
bei dem die vom Dickenprofil unabhängigen Transmissionsdaten (5) mit Referenzdaten in Bezug gesetzt werden, die vorab mittels zerstörender Dichtebestimmung erhalten wurden und eine Zuordnung der vom Dickenprofil unabhängigen Transmissionsdaten (5) zur Dichte des Bauteils (3) oder Bereichs ermöglichen.

5. Verfahren nach einem der Ansprüche 1 bis 4,
bei dem der Laserstrahl (2) für die zweidimensionale Abtastung des Bauteils (3), des Bereichs oder des Volumens moduliert wird und die Aufzeichnung des ortsaufgelösten Transmissionsbildes mit einer auf die Modulation des Laserstrahls (2) abgestimmten Lock-in-Technik erfolgt.

6. Verfahren nach einem der Ansprüche 1 bis 5 zur Prüfung der Dichte und/oder Homogenität von Bauteilen (3) aus Kunststoff, insbesondere aus einem expandierbaren Kunststoff nach der Expansion.

7. Verfahren nach einem der Ansprüche 1 bis 5,
bei dem als Bauteil (3) ein Bauteil aus einem faserverstärkten Kunststoff abgetastet und aus den vom Dickenprofil des Bauteils (3) unabhängigen Transmissionsdaten (5) ortsaufgelöst Faseranteile im Bauteil (3) bestimmt werden.

8. Verfahren nach einem der Ansprüche 1 bis 5,
bei dem als Bauteil (3) ein Bauteil aus einem Mehrkomponentenwerkstoff abgetastet und aus den vom Dickenprofil des Bauteils (3) unabhängigen Transmissionsdaten (5) ortsaufgelöst ein Mischungsverhältnis und/oder eine Verteilung von Komponenten oder Additiven in dem Bauteil (3) bestimmt wird.

9. Verfahren nach einem der Ansprüche 1 bis 5,
bei dem als Bauteil (3) ein Bauteil aus einem Poren enthaltenden Werkstoff abgetastet und aus den vom Dickenprofil des Bauteils (3) unabhängigen Transmissionsdaten (5) ortsaufgelöst eine Größe und/oder Verteilung der Poren in dem Bauteil (3) bestimmt wird.

10. Verfahren nach einem der Ansprüche 1 bis 5,
bei dem als Bauteil (3) ein Bauteil mit einer Klebeschicht abgetastet und aus den vom Dickenprofil des Bauteils (3) unabhängigen Transmissionsdaten (5) ortsaufgelöst eine Qualität der Klebeschicht bestimmt wird.

11. Verfahren zur Prüfung von Dickenabweichungen eines Bauteils (3) oder eines Bereichs eines Bauteils (3) mit homogener Dichte, das vollständig oder in dem Bereich für elektromagnetische Strahlung eines Wellenlängenbereichs im ferninfraroten, infraroten, sichtbaren und/oder ultravioletten Spektralbereich transluzent ist,
bei dem
- durch zweidimensionale Abtastung des Bauteils (3) oder des Bereichs mit einem Laserstrahl (2), für den das Bauteil oder der Bereich transluzent ist, ein ortsaufgelöstes Transmissionsbild des Bauteils (3) oder des Bereichs aufgezeichnet wird, wobei ein Einfluss von Streustrahlung (9) auf das Transmissionsbild durch räumliche Filterung reduziert wird, und
- das Transmissionsbild mit geometrischen Solldaten des Bauteils (3) oder des Bereichs korrigiert wird.

12. Verfahren zur Bestimmung des Feuchtegehaltes eines Bauteils (3), eines Bereichs eines Bauteils (3) oder eines Volumens, das vollständig oder in dem Bereich für Licht bzw. elektromagnetische Strahlung eines Wellenlängenbereichs im ferninfraroten, infraroten, sichtbaren und/oder ultravioletten Spektralbereich transluzent ist,
bei dem
- durch zweidimensionale Abtastung des Bauteils (3), des Bereichs oder des Volumens mit einem oder zwei Laserstrahlen (2) bei zwei unterschiedlichen Wellenlängen, für die das Bauteil (3), der Bereich oder das Volumen transluzent ist, jeweils ortsaufgelöst eine Transmission des Bauteils (3), des Bereichs oder des Volumens für jede der beiden Wellenlängen gemessen wird, wobei die beiden Wellenlängen so gewählt werden, dass sie von Wasser unterschiedlich stark absorbiert werden, und wobei jeweils ein Einfluss von Streustrahlung (9) auf die Transmissionsmessungen durch räumliche Filterung reduziert wird, und
- Transmissionsdaten der beiden Transmissionsmessungen zueinander in Bezug gesetzt werden, um ortsaufgelöst den Feuchtegehalt im Bauteil (3), im Bereich des Bauteils (3) oder im Volumen zu erhalten.

13. Verfahren nach Anspruch 11 oder 12,
bei dem die zweidimensionale Abtastung mit einem optischen Aufbau aus einer Laserlichtquelle, einem Linsensystem (L1-L4) und einer Detektorfläche erfolgt, wobei die Laserlichtquelle und die Detektorfläche sowie das Bauteil (3), der Bereich oder das Volumen konfokal angeordnet sind.

14. Verfahren nach einem der Ansprüche 11 bis 13,
bei dem die räumliche Filterung mit mindestens einer Blende (8) im Strahlengang des Laserstrahls (2) erfolgt.

15. Verfahren nach einem der Ansprüche 11 bis 14,
bei dem der oder die Laserstrahlen (2) für die zweidimensionale Abtastung des Bauteils (3), des Bereichs oder des Volumens moduliert werden und die Aufzeichnung des ortsaufgelösten Transmissionsbildes oder die Transmissionsmessungen mit einer auf die Modulation des oder der Laserstrahlen (2) abgestimmten Lock-in-Technik erfolgt.

## Claims

1. A method for testing the density and/or homogeneity of a component (3), a region of a component (3) or a volume, which is completely translucent or translucent in the region for electromagnetic radiation of a wavelength range in the far infrared, infrared, visible and/or ultraviolet spectral region, wherein
- by two-dimensional scanning of the component (3), the region or the volume with a laser beam (2) for which the component (3), the region or the volume is translucent, a spatially resolved transmission image of the component (3), the region or the volume is recorded, wherein an influence of stray radiation (9) on the transmission image is reduced by means of spatial filtering, and
- the transmission image is corrected with geometrical data of the component (3), the region or the volume, in order to obtain transmission data (5) independent of a thickness profile of the component (3), the region or the volume.

2. The method according to claim 1,
wherein the two-dimensional scanning takes place with an optical setup comprising a laser light source, a lens system (L1-L4) and a detector area, wherein the laser light source and the detector area as well as the component (3), the region or the volume are disposed confocal.

3. The method according to claim 1 or 2,
wherein the spatial filtering takes place with at least one diaphragm (8) in the beam path of the laser beam (2).

4. The method according to any one of claims 1 to 3,
wherein the transmission data (5) independent of the thickness profile are related to reference data, which have previously been obtained by means of destructive density determination and enable an assignment of the transmission data (5) independent of the thickness profile to the density of the component (3) or region.

5. The method according to any one of claims 1 to 4,
wherein the laser beam (2) is modulated for the two-dimensional scanning of the component (3), the region or the volume and the recording of the spatially resolved transmission image takes place with a lock-in technique adapted to the modulation of the laser beam (2).

6. The method according to any one of claims 1 to 5 for testing the density and/or homogeneity of components (3) made of plastic, in particular of an expandable plastic after expansion.

7. The method according to any one of claims 1 to 5,
wherein, as component (3), a component made of a fibre-reinforced plastic is scanned and fibre fractions in the component (3) are determined spatially resolved from the transmission data (5) independent of the thickness profile of the component (3).

8. The method according to any one of claims 1 to 5,
wherein, as component (3), a component made of a multi-component material is scanned and a mixture ratio and/or a distribution of components or additives in the component (3) is determined spatially resolved from the transmission data (5) independent of the thickness profile of the component (3).

9. The method according to any one of claims 1 to 5,
wherein, as component (3), a component made of pore-containing material is scanned and a size and/or distribution of the pores in the component (3) is determined spatially resolved from the transmission data (5) independent of the thickness profile of the component (3).

10. The method according to any one of claims 1 to 5,
wherein, as component (3), a component with an adhesive layer is scanned and a quality of the adhesive layer is determined spatially resolved from the transmission data (5) independent of the thickness profile of the component (3).

11. A method for testing thickness deviations of a component (3) or a region of a component (3) with homogeneous density, which is completely translucent or translucent in the region for electromagnetic radiation of a wavelength range in the far infrared, infrared, visible and/or ultraviolet spectral region,
wherein
- by two-dimensional scanning of the component (3) or the region with a laser beam (2), for which the component or the region is translucent, a spatially resolved transmission image of the component (3) or the region is recorded, wherein an influence of stray radiation (9) on the transmission image is reduced by means of spatial filtering, and
- the transmission image is corrected with geometrical setpoint data of the component (3) or the region.

12. A method for determining the moisture content of a component (3), a region of a component (3) or a volume, which is completely translucent or translucent in the region for light or electromagnetic radiation of a wavelength range in the far infrared, infrared, visible and/or ultraviolet spectral region,
wherein
- by two-dimensional scanning of the component (3), the region or the volume with one or two laser beams (2) at two different wavelengths, for which the component (3), the region or the volume is translucent, a transmission of the component (3), the region or the volume is measured in each case spatially resolved for each of the two wavelengths, wherein the two wavelengths are selected such that they are absorbed to a differing degree by water, and wherein an influence of stray radiation (9) on the transmission measurements is reduced in each case by means of spatial filtering, and
- transmission data of the two transmission measurements are related to one another in order to obtain in a spatially resolved manner the moisture content in the component (3), in the region of the component (3) or in the volume.

13. The method according to claim 11 or 12,
wherein the two-dimensional scanning takes place with an optical setup comprising a laser light source, a lens system (L1-L4) and a detector area, wherein the laser light source and the detector area as well as the component (3), the region or the volume are disposed confocal.

14. The method according to any one of claims 11 to 13,
wherein the spatial filtering takes place with at least one diaphragm (8) in the beam path of the laser beam (2).

15. The method according to any one of claims 11 to 14,
wherein the laser beam or beams (2) for the two-dimensional scanning of the component (3), the region or the volume are modulated and the recording of the spatially resolved transmission image or the transmission measurements takes place with a lock-in technique adapted to the modulation of the laser beam or beams (2).

## Revendications

1. Procédé pour le contrôle de la densité et/ou de l'homogénéité d'un composant (3), d'une zone d'un composant (3) ou d'un volume, qui est complètement translucide ou translucide dans la zone pour rayonnement électromagnétique d'une gamme de longueur d'ondes dans une bande spectrale à rayons infrarouges lointains, infrarouges, visibles et/ou à rayons ultraviolets, pour lequel
- par exploration bidimensionnelle du composant (3), de la zone ou du volume avec un rayon laser (2), pour lesquels le composant (3), la zone ou le volume est translucide, une image de transmission résolue spatialement du composant (3), de la zone ou du volume est enregistrée, un effet du rayonnement dispersé (9) sur l'image de transmission étant réduit par filtrage spatial et
- l'image de transmission avec caractéristiques géométriques du composant (3) de la zone ou du volume est corrigée pour obtenir des données de transmission (5) indépendantes d'un profil d'épaisseur du composant (3), de la zone ou du volume.

2. Procédé selon la revendication 1 pour lequel l'exploration bidimensionnelle avec une structure optique a lieu à partir d'une source lumineuse de laser, un système de lentille (L1-L4) et une surface de détecteur, pour lequel la source lumineuse de laser et la surface de détecteur ainsi que le composant (3), la zone ou le volume sont disposés de façon confocale.

3. Procédé selon la revendication 1 ou 2 pour lequel le filtrage spatial a lieu avec au moins un filtre (8) dans la trajectoire du rayon laser (2).

4. Procédé selon une quelconque des revendications 1 à 3 pour lequel les données de transmission (5) indépendantes du profil d'épaisseur sont établies avec des données de référence en rapport qui ont été préalablement obtenues au moyen d'une détermination de densité destructive et permettent une affectation des données de transmission (5) indépendantes du profil d'épaisseur à la densité du composant (3) ou de la zone.

5. Procédé selon une quelconque des revendications 1 à 4 pour lequel le rayon laser (2) est modulé pour l'exploration bidimensionnelle du composant (3), de la zone ou du volume et l'enregistrement de l'image de transmission résolue spatialement a lieu avec une technique de blocage accordée à la modulation du rayon laser (2).

6. Procédé selon une quelconque des revendications 1 à 5 pour le contrôle de la densité et/ou de l'homogénéité de composants (3) en matière plastique, en particulier en matière plastique expansibles après l'expansion.

7. Procédé selon une quelconque des revendications 1 à 5 pour lequel un composant en matière plastique renforcée par des fibres est explorée en tant que composant (3) et des parties de fibres dans le composant (3) sont déterminées par résolution spatiale à partir de données de transmission (5) indépendantes du profil d'épaisseur du composant (3).

8. Procédé selon une quelconque des revendications 1 à 5 pour lequel un composant en matériau à composants multiples est exploré en tant que composant (3) et un rapport de mélange et/ou une répartition des composants ou des additifs dans le composant (3) est déterminé(e) par résolution spatiale à partir de données de transmission (5) indépendantes du profil d'épaisseur du composant (3).

9. Procédé selon une quelconque des revendications 1 à 5 pour lequel un composant en matériau contenant des pores est exploré et une valeur et/ou une dispersion des pores dans le composant (3) est déterminée par résolution spatiale à partir de données de transmission (5) indépendantes du profil d'épaisseur du composant (3).

10. Procédé selon une quelconque des revendications 1 à 5 pour lequel un composant avec une couche adhésive est exploré en tant que composant (3) et une qualité de la couche adhésive est déterminée par résolution spatiale à partir de données de transmission (5) indépendantes du profil d'épaisseur du composant (3).

11. Procédé pour le contrôle des écarts d'épaisseur d'un composant (3) ou d'une zone d'un composant (3) avec densité homogène, qui est complètement translucide ou translucide dans la zone pour rayonnement électromagnétique d'une gamme de longueur d'ondes dans une bande spectrale à rayons infrarouges lointains, infrarouges, visibles et/ou à rayons ultraviolets, pour lequel
- par exploration bidimensionnelle du composant (3), ou de la zone avec un rayon laser (2), pour lesquels le composant ou la zone est translucide, une image de transmission résolue spatialement du composant (3) ou de la zone est enregistrée, un effet du rayonnement dispersé (9) sur l'image de transmission étant réduit par filtrage spatial et
- l'image de transmission avec données théoriques géométriques du composant (3) est corrigée.

12. Procédé pour la détermination de la teneur en humidité d'un composant (3), d'une zone du composant (3) ou d'un volume qui est complètement translucide ou translucide dans la zone pour lumière ou rayonnement électromagnétique d'une gamme de longueur d'ondes dans une bande spectrale à rayons infrarouges lointains, infrarouges, visibles et/ou à rayons ultraviolets pour lequel
- par exploration bidimensionnelle du composant (3), de la zone ou du volume avec un ou deux rayons laser (2) à deux longueurs d'ondes différentes, pour lesquels le composant (3), la zone ou le volume est translucide, une transmission du composant (3), de la zone ou du volume est à chaque fois mesurée par résolution spatiale pour chacune des deux longueurs d'ondes, les deux longueurs d'ondes étant choisies de telle sorte qu'elles sont fortement différemment absorbées par l'eau et un effet du rayonnement dispersé (9) sur les mesures de transmission étant à chaque fois réduit par filtrage spatiale, et
- des données de transmission des deux mesures de transmission sont établies en rapport les unes par rapport aux autres pour obtenir par résolution spatiale la teneur en humidité dans le composant (3), dans la zone du composant (3) ou dans le volume.

13. Procédé selon la revendication 11 ou 12 pour lequel l'exploration bidimensionnelle avec une structure optique a lieu à partir d'une source lumineuse de laser, d'un système de lentille (L1-L4) et d'une surface de détecteur, la source lumineuse de laser et la surface de détecteur ainsi que le composant (3), la zone ou le volume étant disposés de façon confocale.

14. Procédé selon une quelconque des revendications 11 à 13 pour lequel le filtrage spatial a lieu avec au moins une lentille (8) dans la trajectoire de rayon du rayon laser (2).

15. Procédé selon une quelconque des revendications 11 à 14 pour lequel le ou les rayons laser (2) est ou sont modulé(s) pour l'exploration bidimensionnelle du composant (3) de la zone ou du volume et l'enregistrement de l'image de transmission ou des mesures de transmission par résolution spatiale a lieu avec une technique de blocage réglée sur la modulation du ou des rayons laser (2).
